# EUROPEAN PATENT SPECIFICATION

(11) **EP 3 572 786 B1**
(45) Date of publication and mention of the grant of the patent: **08.02.2023**
(21) Application number: 17892700.0
(22) Date of filing: 27.12.2017
(51) Int. Cl.: G01N 15/06, B60H 1/24, B60H 3/06, B60H 1/00

(54) **DUST DETECTING DEVICE**
STAUBDETEKTIONSVORRICHTUNG
DISPOSITIF DE DÉTECTION DE POUSSIÈRE

(30) Priority: 18.01.2017 JP 2017006972
(43) Date of publication of application: 27.11.2019
(73) Proprietor: Denso Corporation, Kariya-city Aichi 448-8661 (JP)
(72) Inventor: YAMAZAKI Ryuta, Kariya-city Aichi 448-8661 (JP); ISHIYAMA Naotaka, Kariya-city Aichi 448-8661 (JP)
(74) Representative: TBK
(86) International application number: PCT/JP2017/047107
(87) International publication number: WO 2018/135284

(56) References cited:
- WO-A1-2016/013469
- JP-A- 2006 290 001
- JP-A- 2006 290 001
- JP-A- 2016 023 867
- JP-A- 2017 116 417

## Description

### CROSS REFERENCE TO RELATED APPLICATION

This application is based on Japanese Patent Application No. 2017-006972 filed on January 18, 2017.

### TECHNICAL FIELD

The present disclosure relates to a particulates detector that detects a particulate concentration by using an optical particulate sensor.

### BACKGROUND

In Patent Literature 1, a dust sensor configured as an optical particulate sensor is described. The dust sensor in Patent Literature 1 detects a particulate amount by a pulse-driven light source emitting light and a light receiving element detecting scattered light synchronized with the generated pulse. The dust sensor identifies the particulate as dust when a difference between a maximum value and an average value of outputs of the light receiving element in a certain period is larger than a predetermined value.

The dust sensor in Patent Literature 1 is provided with an identification means. When the scattered light of the continuously-emitted pulses emitted in a constant cycle from the light source is received by the light receiving element in the certain period, if the light is a single light-receiving pulse without any preceding and succeeding continuous light-receiving pulses, the identification means does not identify the light reception as dust. Patent Literature 2 discloses an air purifier according to the preamble of claim 1. Patent Literature 3 discloses further prior art.

### PRIOR ART LITERATURE

### PATENT LITERATURE

Patent Literature 1: JP 2003 - 065 940 A
Patent Literature 2 : WO 2016 / 013 469 A1
Patent Literature 3 : JP 2006 - 290 001 A

### SUMMARY OF INVENTION

The dust sensor in Patent Literature 1 is an optical particulate sensor that detects the particulate amount (i.e., the particulate concentration) by applying the light and receiving the scattered light as described above. The inventors have found that a sensor output value indicating the particulate concentration changes in response to a change in wind speed at a sensed position, even if the actual particulate concentration at the sensed position is constant. The lower the wind speed at the sensing position is, the higher particulate concentration the output value of the optical particulate sensor changes to indicate, if the actual particulate concentration is constant and the wind speed changes at the sensed position, for example. Therefore, depending on the wind speed at the sensed position, particulate concentration detection accuracy may reduce. As a result of a close study by the inventors, the above fact has been found.

With the above-described point in view, it is an objective of the present disclosure to provide a particulates detector capable of obtaining a particulate concentration at a sensed position with satisfactory accuracy while suppressing an influence of a wind speed at the sensed position.

The object is solved by a particulates detector according to claim 1.

Accordingly, in a case where the sensor output value is fixed, the lower the wind speed at the sensed position is, the lower corrected value for the particulate concentration is determined Therefore, the particulate concentration indicated by the corrected value is the particulate concentration on which the influence of the wind speed at the sensed position is suppressed. Therefore, it is possible to obtain the particulate concentration at the sensed position with satisfactory accuracy by using the corrected value.

According to a particulates detector according to claim 4, it is possible to remove the influence of the wind speed at the sensed position from the particulate concentration indicated by the corrected value by using the criterion relationship. Therefore, also with this configuration, the particulate concentration indicated by the corrected value is the particulate concentration on which the influence of the wind speed at the sensed position is suppressed. Therefore, it is possible to obtain the particulate concentration at the sensed position with satisfactory accuracy by using the corrected value. Further advantageous embodiments are defined in the dependent claims.

### BRIEF DESCRIPTION OF DRAWINGS

FIG. 1 is a schematic view of an air conditioning unit in a first embodiment.
FIG. 2 is a block diagram of an electrical system related to the air conditioning unit in the first embodiment.
FIG. 3 is a diagram showing relationships among a sensor output value of a particulate sensor, a wind speed at a sensed position, and an actual particulate concentration in the first embodiment.
FIG. 4 is a flowchart showing control processing performed by a correction section of a particulates detector in the first embodiment.
FIG. 5 is a schematic diagram showing a correction map used by the correction section to determine a corrected value in the control processing in FIG. 4.
FIG. 6 is a block diagram of an electrical system related to an air conditioning unit in a second embodiment and corresponds to FIG. 2 in the first embodiment.
FIG. 7 is a flowchart showing control processing performed by a correction section of a particulates detector in the second embodiment and corresponds to FIG. 4 in the first embodiment.
FIG. 8 is a schematic view of an air conditioning unit in a third embodiment and corresponds to FIG. 1 in the first embodiment.
FIG. 9 is a block diagram of an electrical system related to the air conditioning unit in the third embodiment and corresponds to FIG. 6 in the second embodiment.
FIG. 10 is a flowchart showing control processing performed by a correction section of a particulates detector in the third embodiment and corresponds to FIG. 7 in the second embodiment.

### DETAILED DESCRIPTION

Respective embodiments will be described below with reference to the drawings. The same or equivalent parts in the following respective embodiments are provided with the same reference signs in the views.

### (First Embodiment)

A particulates detector 32 in the present embodiment detects a particulate concentration in an air passage formed inside an air conditioning unit 2. First, an overview of a structure of the air conditioning unit 2 will be described.

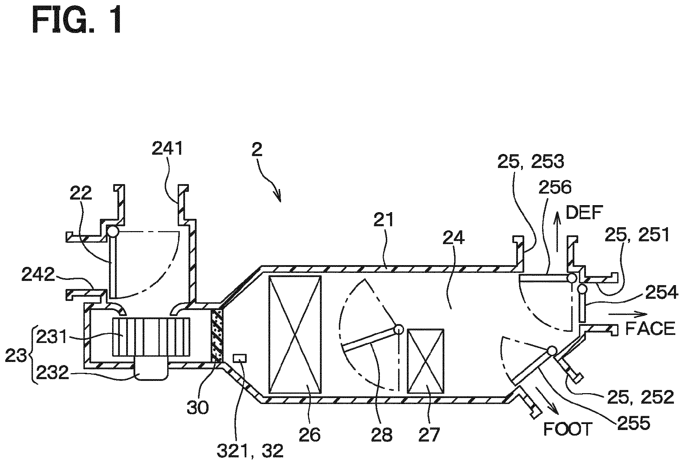

The air conditioning unit 2 shown in FIG. 1 is a vehicular air conditioning unit that air-conditions a vehicle interior. The air conditioning unit 2 is installed in an instrument panel disposed on a vehicle front side in the vehicle interior, for example.

As shown in FIG. 1, the air conditioning unit 2 includes an air conditioning case 21, an inside/outside air switching door 22, a blower 23, an evaporator 26, a heater core 27, an air mix door 28, an air filter 30, the particulates detector 32, and the like.

The air conditioning case 21 is made of resin having a certain degree of elasticity and excellent in strength. Examples of the resin forming the air conditioning case 21 include polypropylene. Inside the air conditioning case 21, an air passage through which air flows, i.e., a ventilating path 24 is formed. The air conditioning case 21 has an inside air introducing port 241 for introducing inside air from a predetermined position in the vehicle interior into the ventilating path 24 and an outside air introducing port 242 for introducing outside air from outside of the vehicle into the ventilating path 24 on an upstream side of the ventilating path 24 in an air flow direction.

A duct (not shown) formed as a separate member from the air conditioning case 21 may be connected to the inside air introducing port 241 or the outside air introducing port 242. In this case, air is introduced from the inside air introducing port 241 or the outside air introducing port 242 into the ventilating path 24 through the duct.

The air conditioning case 21 has a plurality of blow openings 25, for blowing air from the ventilating path 24 into a front seat area in the vehicle interior, on a downstream side of the ventilating path 24 in the air flow direction. The plurality of blow openings 25 include a face blow opening 251, a foot blow opening 252, and a defroster blow opening 253.

The face blow opening 251 blows conditioned air toward an upper body of an occupant sitting in a front seat. The foot blow opening 252 blows the conditioned air toward feet of the occupant. The defroster blow opening 253 blows the conditioned air toward a windshield of the vehicle.

Ducts (not shown) formed as separate members from the air conditioning case 21 may be connected to the face blow opening 251, the foot blow opening 252, and the defroster blow opening 253. In this case, the air flowing out of the face blow opening 251, the foot blow opening 252, and the defroster blow opening 253 is supplied into the vehicle interior from a face blow outlet, a foot blow outlet, and a defroster blow outlet (not shown) provided in the vehicle through the ducts.

In the air conditioning case 21, the inside/outside air switching door 22, the blower 23, the evaporator 26, the heater core 27, the air mix door 28, and the like are provided.

The inside/outside air switching door 22 continuously adjusts an opening area of the inside air introducing port 241 and an opening area of the outside air introducing port 242. The inside/outside air switching door 22 is driven by an actuator such as a servomotor (not shown). The inside/outside air switching door 22 rotates so as to open one of the inside air introducing port 241 and the outside air introducing port 242 wider as the inside/outside air switching door 22 closes the other introducing port. In this way, the inside/outside air switching door 22 can adjust a ratio between volumes of inside air and outside air introduced into the ventilating path 24.

The blower 23 is formed by a centrifugal fan 231, a motor 232 that rotationally drives the centrifugal fan 231, and the like. When the centrifugal fan 231 is driven to rotate with the motor 232 of the blower 23, an airflow is formed in the ventilating path 24. As a result, the air introduced from the inside air introducing port 241 or the outside air introducing port 242 into the ventilating path 24 flows through the ventilating path 24 and is blown out of any of the face blow opening 251, the foot blow opening 252, and the defroster blow opening 253. The face blow opening 251, the foot blow opening 252, and the defroster blow opening 253 are respectively provided with a face blow opening door 254, a foot blow opening door 255, and a defroster blow opening door 256 for adjusting opening areas of the respective openings.

The evaporator 26 is a heat exchanger for cooling the air flowing through the ventilating path 24. The heater core 27 is a heat exchanger for heating the air flowing through the ventilating path 24. The heater core 27 is disposed on a downstream side of the evaporator 26 in the air flow direction.

Between the evaporator 26 and the heater core 27 of the air conditioning unit 2, the air mix door 28 is provided. The air mix door 28 adjusts a ratio between a volume of air passing through the evaporator 26 and detouring around the heater core 27 and a volume of air passing through the heater core 27 after passing through the evaporator 26.

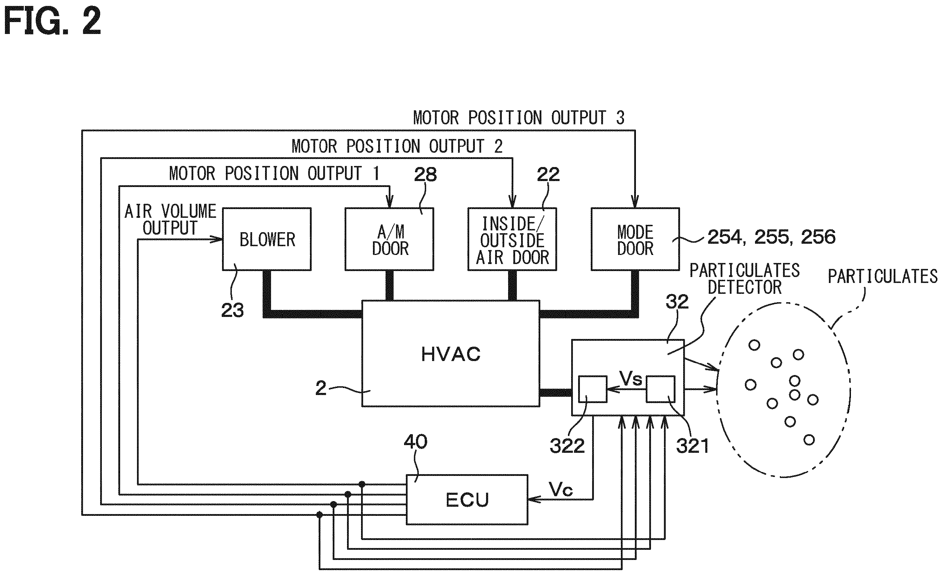

As shown in FIGS. 1 and 2, an air conditioning control device 40 is a control device that controls the air conditioning unit 2. To put it concretely, the air conditioning control device 40 is an electronic control unit (i.e., ECU) formed by a microcomputer that performs various air conditioning controls in the air conditioning unit 2. For example, the above-described blower 23, the inside/outside air switching door 22, the air mix door 28, the face blow opening door 254, the foot blow opening door 255, and the defroster blow opening door 256 are driven and controlled by the air conditioning control device 40.

As shown in FIG. 1, the air filter 30 is disposed between the blower 23 and the evaporator 26 in the ventilating path 24 of the air conditioning case 21. In other words, the air filter 30 is disposed on a downstream side of the blower 23 in the air flow direction and on an upstream side of the evaporator 26 in the air flow direction.

The air filter 30 traps dust and the like included in the air passing through the air filter 30 to some extent. Therefore, the air blown out of the blower 23 flows into the evaporator 26 after removal of the dust and the like in the air to some extent by the air filter 30.

A particulates detector 32 is a detecting device for a vehicle and detects a particulate concentration at a predetermined sensed position in the vehicle interior. Then, the particulates detector 32 outputs a detection signal indicating the particulate concentration to the air conditioning control device 40.

The particulates detector 32 is disposed between the air filter 30 and the evaporator 26 in the ventilating path 24 of the air conditioning case 21. Therefore, the sensed position, i.e., the detected position is a portion in the air conditioning unit 2 provided in the vehicle interior (i.e., a portion in the air conditioning case 21). Specifically, the sensed position is on a downstream side of the air filter 30 in the air flow direction and on the upstream side of the evaporator 26 in the air flow direction in the ventilating path 24.

As shown in FIGS. 1 and 2, the particulates detector 32 includes a particulate sensor 321 and a correction section 322. The correction section 322 is formed integrally with the particulate sensor 321. Since the particulates detector 32 is disposed between the blower 23 and the evaporator 26 in the ventilating path 24 as described above, the particulate sensor 321 and the correction section 322 are naturally disposed between the blower 23 and the evaporator 26.

The particulate sensor 321 in the present embodiment is a particulate sensor that detects a particulate concentration by using a light scattering method, i.e., an optical particulate sensor. In other words, the particulate sensor 321 includes a light source and a light receiving element and detects a particulate concentration by detecting a scattered light with the light receiving element.

The particulate sensor 321 outputs a sensor output value Vs corresponding to the particulate concentration at a sensed position which is a portion in the air conditioning unit 2. Since the sensor output value Vs is a voltage value in the present embodiment, the sensor output value Vs may be also referred to as "sensor output voltage Vs". The greater the sensor output value Vs which is the voltage value is, the higher particulate concentration the sensor output value Vs indicates.

The correction section 322 of the particulates detector 32 is formed by the microcomputer including a CPU, a ROM, a RAM, and the like (not shown). In other words, the correction section 322 is an electronic control unit and performs various calculations and processing steps based on a control program stored in the ROM, for example. Semiconductor memories such as the ROM and the RAM are non-transitory tangible storage media.

To put it concretely, the correction section 322 in the present embodiment determines a corrected value Vc obtained by correcting the sensor output value Vs as a value indicating the particulate concentration at the sensed position. Since the sensor output value Vs is the voltage value in the present embodiment as described above, the corrected value Vc is a voltage value as well. Therefore, the corrected value Vc may be also referred to as the corrected voltage Vc. Similarly to the sensor output value Vs, the greater the corrected value Vc which is the voltage value is, the higher particulate concentration the corrected value Vc indicates.

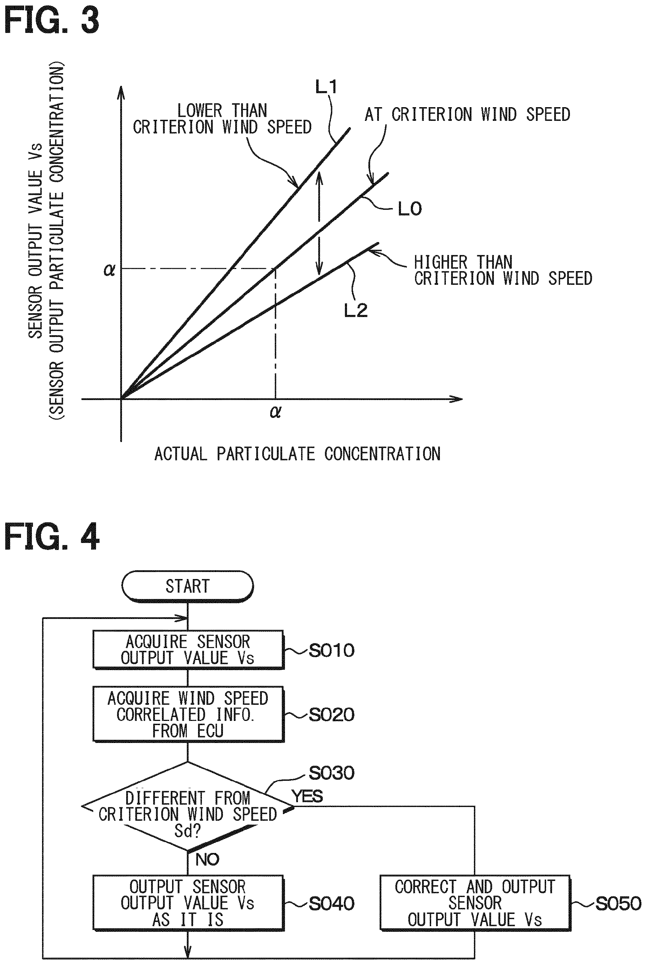

Here, since the particulate sensor 321 in the present embodiment is an optical particulate sensor, the sensor output value Vs of the particulate sensor 321 is influenced by a wind speed at the sensed position. For example, as shown in FIG. 3, the sensor output values Vs and the sensor output particulate concentrations are correlated to each other so that the sensor output particulate concentration indicated by the sensor output value Vs coincides with the actual particulate concentration when the particulate sensor 321 detects the particulate concentration at a predetermined criterion wind speed Sd. In this case, a relationship between the sensor output value Vs and the actual particulate concentration is represented by a solid line L0 in FIG. 3. For example, in the criterion relationship which is the relationship represented by the solid line L0, the sensor output particulate concentration is α when the actual particulate concentration is α.

On the other hand, when the particulate sensor 321 detects the particulate concentration at a wind speed lower than the criterion wind speed Sd, a relationship between the sensor output value Vs and the actual particulate concentration is represented by a solid line L1, for example. Therefore, even if the actual particulate concentration at the sensed position is constant, the sensor output value Vs indicates the higher sensor output particulate concentration than the actual particulate concentration when the wind speed at the sensed position becomes lower than the criterion wind speed Sd.

When the particulate sensor 321 detects the particulate concentration at a wind speed higher than the criterion wind speed Sd, a relationship between the sensor output value Vs and the actual particulate concentration is represented by a solid line L2, for example. Therefore, even if the actual particulate concentration at the sensed position is constant, the sensor output value Vs indicates the lower sensor output particulate concentration than the actual particulate concentration when the wind speed at the sensed position becomes higher than the criterion wind speed Sd.

Since the sensor output value Vs changes according to the wind speed at the sensed position in this manner, the particulates detector 32 includes the correction section 322 in addition to the particulate sensor 321 in order to correct the change. The correction section 322 performs control processing shown in a flowchart in FIG. 4 to suppress the influence of the wind speed on the detection of the particulate concentration.

FIG. 4 is the flowchart showing the control processing performed by the correction section 322. The correction section 322 performs the control processing in FIG. 4 during operation of the air conditioning unit 2, for example.

As shown in FIG. 4, the correction section 322 first acquires the sensor output value Vs output from the particulate sensor 321 in step S010. After step S010, the correction section 322 goes to step S020.

In step S020, the correction section 322 acquires wind speed correlated information correlated with the wind speed at the sensed position from the air conditioning control device 40. Examples of the wind speed correlated information include a rotation speed of the motor 232 of the blower 23, a door position of the air mix door 28, a door position of the inside/outside air switching door 22, respective door positions of the blow opening doors 254, 255, 256, a vehicle speed, and the like. The correction section 322 acquires all or any of a plurality of the above-listed examples of information.

Then, the correction section 322 estimates the wind speed at the sensed position based on the acquired wind speed correlated information. For example, the correction section 322 estimates the wind speed at the sensed position by using a map determined in advance by experiments. In this manner, in the present embodiment, the correction section 322 indirectly acquires the wind speed at the sensed position based on the wind speed correlated information. After step S020, the correction section 322 goes to step S030.

In step S030, the correction section 322 compares the wind speed at the sensed position acquired in step S020 with the criterion wind speed Sd determined in advance. As a result of the comparison, the correction section 322 determines whether there is a difference between the wind speed at the sensed position and the criterion wind speed Sd. A method of determining the criterion wind speed Sd is not especially limited. For example, the criterion wind speed Sd is set to a substantially median wind speed in a range in which the wind speed can change at the sensed position.

For example, the determination in step S030 is not a determination of whether the wind speed at the sensed position closely coincides with the criterion wind speed Sd but a determination of whether the wind speed at the sensed position falls within a predetermined criterion wind speed range including the criterion wind speed Sd as the median wind speed. The predetermined criterion wind speed range is set in advance by experiments to such a range that the influence of the wind speed on the sensor output value Vs can be substantially ignored.

When the wind speed at the sensed position is outside the criterion wind speed range, the correction section 322 determines that there is a difference between the wind speed at the sensed position and the criterion wind speed Sd.

On the other hand, when the wind speed at the sensed position is in the criterion wind speed range, the correction section 322 determines that there is no difference between the wind speed at the sensed position and the criterion wind speed Sd. In other words, in this case, the correction section 322 regards the wind speed at the sensed position as the criterion wind speed Sd.

When the correction section 322 determines that there is a difference between the wind speed at the sensed position and the criterion wind speed Sd in step S030, the correction section 322 goes to step S050. On the other hand, when the correction section 322 determines that there is no difference between the wind speed at the sensed position and the criterion wind speed Sd, the correction section 322 goes to step S040.

In step S040, the correction section 322 decides to employ the sensor output value Vs acquired in step S010 as it is as the corrected value Vc and outputs the corrected value Vc to the air conditioning control device 40. In short, the correction section 322 outputs the sensor output value Vs to the air conditioning control device 40 as it is without correcting the sensor output value Vs. After step S040, the correction section 322 returns to step S010.

In step S050, the correction section 322 determines the corrected value Vc based on the sensor output value Vs and the wind speed at the sensed position and outputs the corrected value Vc to the air conditioning control device 40. In short, the correction section 322 corrects the sensor output value Vs and outputs the corrected value to the air conditioning control device 40.

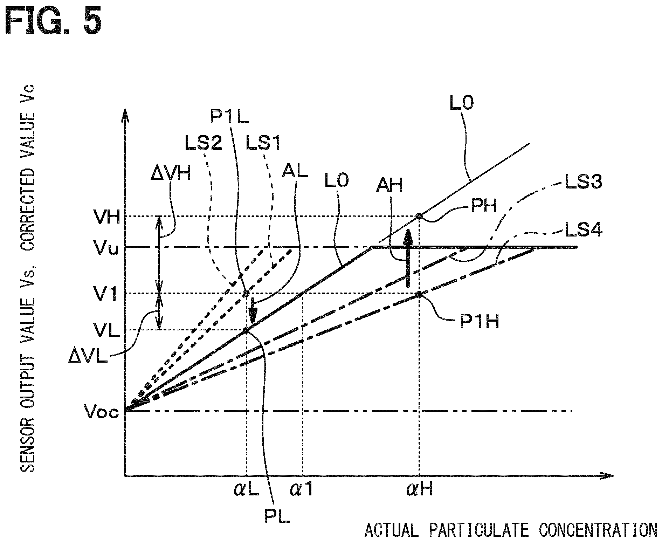

To put it concretely, the corrected value Vc is determined by using a correction map in FIG. 5 determined in advance. The correction map is obtained by experiments similarly to the graph in FIG. 3 and shows a relationship between the sensor output value Vs and the actual particulate concentration for each wind speed at the sensed position. In other words, the correction map in FIG. 5 is obtained in advance as predetermined relationships among the sensor output value Vs, the actual particulate concentration, and the wind speeds at the sensed position.

For example, a solid line L0 in FIG. 5 represents the criterion relationship which is the relationship between the sensor output value Vs and the actual particulate concentration when the wind speed at the sensed position is the criterion wind speed Sd. A broken line LS1 represents the relationship between the sensor output value Vs and the actual particulate concentration when the wind speed at the sensed position is a wind speed S1 lower than the criterion wind speed Sd. A broken line LS2 represents the relationship between the sensor output value Vs and the actual particulate concentration when the wind speed at the sensed position is a wind speed S2 lower than the wind speed S1.

A one-dot chain line LS3 represents the relationship between the sensor output value Vs and the actual particulate concentration when the wind speed at the sensed position is a wind speed S3 higher than the criterion wind speed Sd. A one-dot chain line LS4 represents the relationship between the sensor output value Vs and the actual particulate concentration when the wind speed at the sensed position is a wind speed S4 higher than the wind speed S3.

On a vertical axis in FIG. 5, a voltage Voc is a lower limit value of the sensor output value Vs and a voltage Vu is an upper limit value of the sensor output value Vs. The only five relationship lines L0, LS1 to LS4 each of which represents the relationship between the sensor output value Vs and the actual particulate concentration are shown as examples in FIG. 5, because FIG. 5 is a schematic diagram. The actual correction map is formed by a large number of relationship lines.

Next, how to determine the corrected value Vc will be described in a case where the correction section 322 corrects a certain value (specifically, a voltage V1) obtained as a sensor output value Vs to obtain a corrected value Vc, i.e., the case where the sensor output value Vs is the voltage V1, for example.

When the wind speed at the sensed position is the wind speed S1, for example, the broken line LS1 is employed as the relationship line representing the relationship between the sensor output value Vs and the actual particulate concentration in the correction map in FIG. 5. Since the sensor output value Vs is the voltage V1 as described above, a point P1L on the broken line LS1 where the sensor output value Vs is the voltage V1 is identified and a point PL on the solid line L0 where the actual particulate concentration is equal to the actual particulate concentration of the point P1L is identified. When the point PL is identified, the voltage VL indicated by the point PL is employed as the corrected value Vc.

In other words, the correction section 322 obtains the particulate concentration αL corresponding to the wind speed S1 at the sensed position and the voltage V1 which is the certain value obtained as the sensor output value Vs in the correction map in FIG. 5. The correction section 322 determines the corrected value Vc so that the corrected value Vc becomes the value (i.e., the voltage VL) corresponding to the obtained particulate concentration αL on the solid line L0.

Therefore, in this case, a correction amount which is a difference between the sensor output value Vs and the corrected value Vc is ΔVL which is greater than 0. The corrected value Vc is the voltage VL obtained by correcting the sensor output value Vs as shown by an arrow AL in FIG. 5. In other words, as can be seen from a relationship, "VL=V1-ΔVL" in the correction map in FIG. 5, the correction section 322 employs the lower corrected value Vc for the particulate concentration with respect to the sensor output value Vs when the wind speed at the sensed position is lower than the criterion wind speed Sd. To put it concretely, the lower value for the particulate concentration is a value on a lower voltage side.

As can be seen from the plurality of relationship lines L0, LS1, LS2, the lower the wind speed at the sensed position is, the larger the correction section 322 makes the difference between the sensor output value Vs and the corrected value Vc, when the wind speed at the sensed position is lower than the criterion wind speed Sd.

The corrected value Vc when the wind speed at the sensed position is the wind speed S1 lower than the criterion wind speed Sd is determined as described above. For example, if the air conditioning control device 40 acquires the voltage V1 which is the sensor output value Vs as it is as a detection signal, the air conditioning control device 40 erroneously recognizes that the particulate concentration is α1. On the other hand, with the correction by using the correction map in FIG. 5, the air conditioning control device 40 acquires the voltage VL which is the corrected value Vc as the detection signal and therefore can correctly recognize that the particulate concentration is αL.

The corrected value Vc when the wind speed at the sensed position is the wind speed S4 higher than the criterion wind speed Sd is determined in the same way as described above. In other words, when the wind speed at the sensed position is the wind speed S4, the broken line LS4 is employed as the relationship line representing the relationship between the sensor output value Vs and the actual particulate concentration in the correction map in FIG. 5. Since the sensor output value Vs is the voltage V1 as described above, a point P1H on the broken line LS4 where the sensor output value Vs is the voltage V1 is identified and a point PH on the solid line L0 where the actual particulate concentration is equal to the actual particulate concentration of the point P1H is identified. When the point PH is identified, the voltage VH indicated by the point PH is employed as the corrected value Vc.

In other words, the correction section 322 obtains the particulate concentration αH corresponding to the wind speed S4 at the sensed position and the voltage V1 which is the certain value obtained as the sensor output value Vs in the correction map in FIG. 5. The correction section 322 determines the corrected value Vc so that the corrected value Vc becomes the value (i.e., the voltage VH) corresponding to the obtained particulate concentration αH on the solid line L0.

Therefore, in this case, a correction amount which is a difference between the sensor output value Vs and the corrected value Vc is ΔVH which is greater than 0. The corrected value Vc is the voltage VH obtained by correcting the sensor output value Vs as shown by an arrow AH in FIG. 5. In other words, as can be seen from a relationship, "VH=V1+ΔVH" in the correction map in FIG. 5, the correction section 322 employs the higher corrected value Vc for the particulate concentration with respect to the sensor output value Vs when the wind speed at the sensed position is higher than the criterion wind speed Sd. To put it concretely, the higher value for the particulate concentration is a value on a higher voltage side.

As can be seen from the plurality of relationship lines L0, LS3, LS4, the higher the wind speed at the sensed position is, the larger the correction section 322 makes the difference between the sensor output value Vs and the corrected value Vc, when the wind speed at the sensed position is higher than the criterion wind speed Sd.

The corrected value Vc when the wind speed at the sensed position is the wind speed S4 higher than the criterion wind speed Sd is determined as described above. With the correction by using the correction map in FIG. 5, the air conditioning control device 40 acquires the voltage VH which is the corrected value Vc as the detection signal and therefore can correctly recognize that the particulate concentration is αH.

As can be seen from the correction map in FIG. 5, the lower the wind speed at the sensed position is, the lower corrected value Vc for the particulate concentration the correction section 322 employs, when the sensor output value Vs is fixed whether the wind speed at the sensed position is higher or lower than the criterion wind speed Sd. Here, the sensor output value Vs is fixed, because the corrected value Vc changes according to the sensor output value Vs when the sensor output value Vs changes. In other words, when the sensor output value Vs is fixed refers to when the sensor output value Vs is the certain value (e.g., the voltage V1). Therefore, when the sensor output value Vs is fixed can be referred to as when the correction section 322 corrects the certain value obtained as the sensor output value Vs to obtain the corrected value V. After step S050, the correction section 322 returns to step S010.

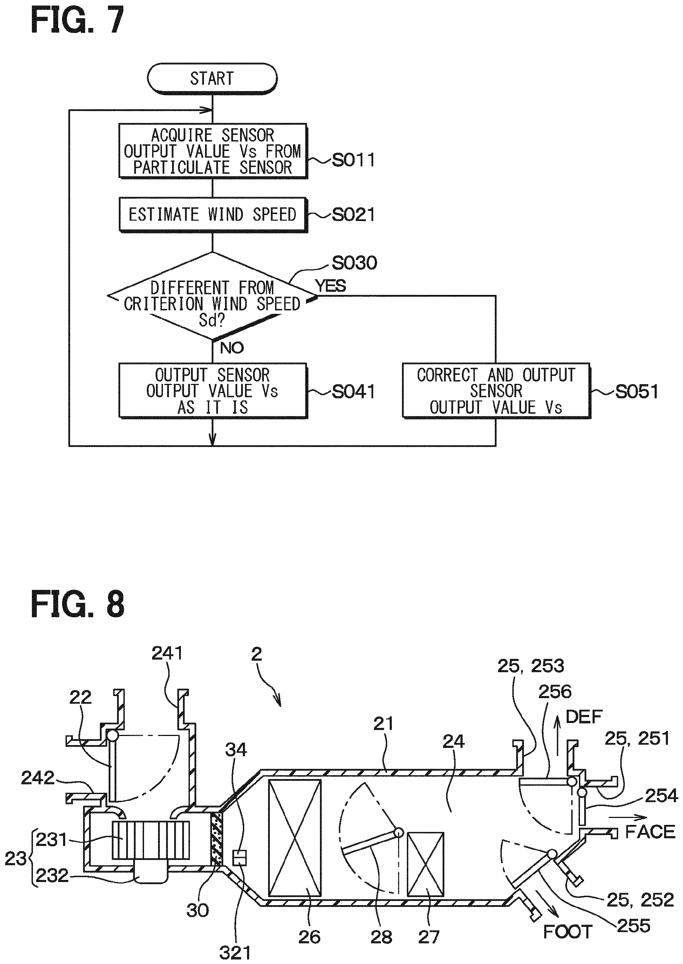

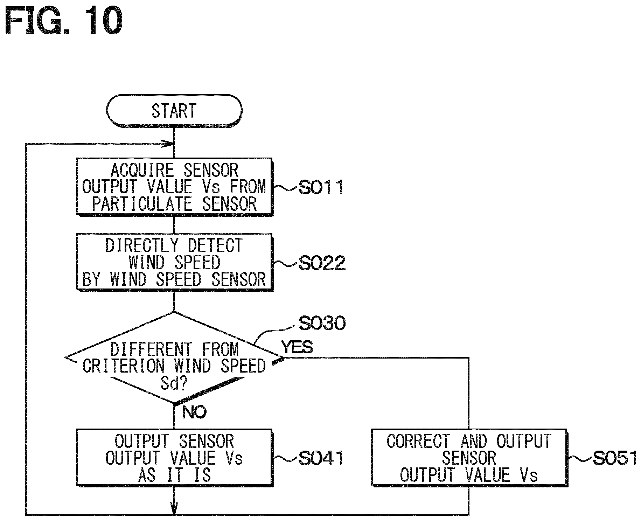

Each processing in each step in FIG. 4 described above forms a functional unit realizing each function. This holds true for flowcharts in FIGS. 7 and 10 described below.

As described above, according to the present embodiment, as shown in FIG. 5, the lower the wind speed at the sensed position is, the lower corrected value Vc for the particulate concentration is employed, when the sensor output value Vs is fixed. Therefore, the particulate concentration indicated by the corrected value Vc is the particulate concentration on which the influence of the wind speed at the sensed position is suppressed. Therefore, it is possible to obtain the particulate concentration at the sensed position stably with satisfactory accuracy by using the corrected value Vc.

According to the present embodiment, as shown in FIGS. 4 and 5, the correction section 322 employs the sensor output value Vs as it is as the corrected value Vc when there is no difference between the wind speed at the sensed position and the criterion wind speed Sd. When the wind speed at the sensed position is higher than the criterion wind speed Sd, the correction section 322 employs the higher corrected value Vc for the particulate concentration with respect to the sensor output value Vs. Moreover, the higher the wind speed at the sensed position is, the larger the correction section 322 makes the difference between the sensor output value Vs and the corrected value Vc. On the other hand, when the wind speed at the sensed position is lower than the criterion wind speed Sd, the correction section 322 employs the lower corrected value Vc for the particulate concentration with respect to the sensor output value Vs. Moreover, the lower the wind speed at the sensed position is, the larger the correction section 322 makes the difference between the sensor output value Vs and the corrected value Vc. Therefore, whether the wind speed at the sensed position is higher or lower than the criterion wind speed Sd, it is possible to appropriately determine the corrected value Vc while conforming to specific characteristics of the optical particulate sensor 321.

According to the present embodiment, as shown in FIG. 4, the correction section 322 estimates the wind speed at the sensed position based on the wind speed correlated information correlated to the wind speed at the sensed position. Therefore, it is possible to acquire the wind speed at the sensed position without a detector such as a wind speed sensor.

According to the present embodiment, the correction section 322 obtains the particulate concentration corresponding to the wind speed at the sensed position and the certain value (e.g., the voltage V1) obtained as the sensor output value Vs in the correction map in FIG. 5. The correction section 322 determines the corrected value Vc so that the corrected value Vc becomes the value (e.g., the voltage VL or the voltage VH) corresponding to the obtained particulate concentration on the solid line L0.

In this way, it is possible to remove the influence of the wind speed at the sensed position from the particulate concentration indicated by the corrected value Vc by using the relationship represented by the solid line L0. Therefore, the particulate concentration indicated by the corrected value Vc is the particulate concentration on which the influence of the wind speed at the sensed position is suppressed. Therefore, it is possible to obtain the particulate concentration at the sensed position with satisfactory accuracy by using the corrected value Vc. While the above-described certain value obtained as the sensor output value Vs is the voltage V1, for example, in FIG. 5, it is not limited to a specific value.

### (Second Embodiment)

Next, the second embodiment will be described. In the present embodiment, differences from the above-described first embodiment will be mainly described. Portions similar or equivalent to those in the above-described embodiment will not be described or will be described briefly. This holds true for the embodiments described later.

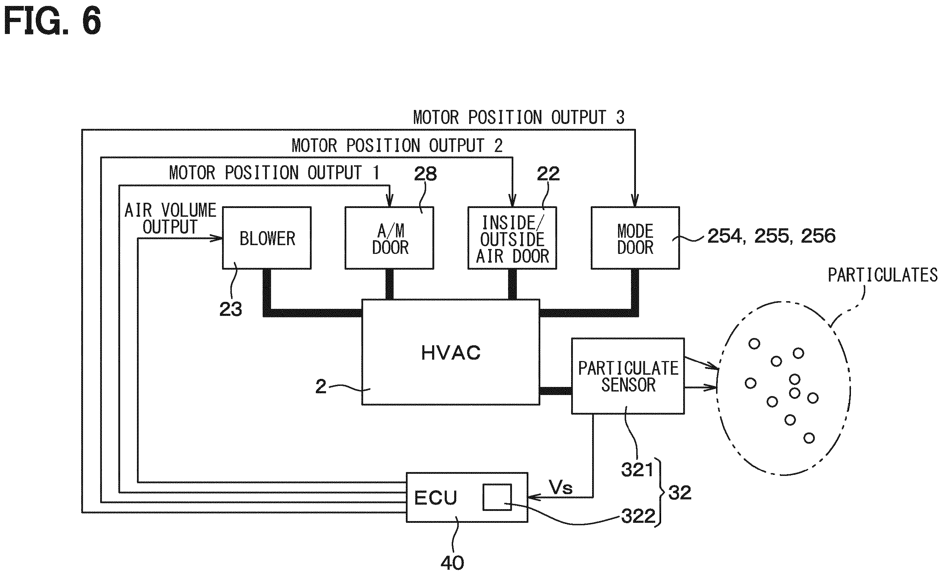

As shown in FIG. 6, a correction section 322 of a particulates detector 32 is included in an air conditioning control device 40. For example, the correction section 322 forms a functional unit of the air conditioning control device 40. The present embodiment is different from the first embodiment in this point.

Therefore, the correction section 322 in the present embodiment is not disposed in a ventilating path 24 of an air conditioning case 21 while a particulate sensor 321 of the particulates detector 32 is disposed in the ventilating path 24 as shown in FIG. 1 as in the first embodiment. In short, the particulate sensor 321 is provided separately from the air conditioning control device 40.

The correction section 322 in the present embodiment performs control processing in FIG. 7 during operation of an air conditioning unit 2, for example. The control processing in FIG. 7 is basically similar to the control processing in FIG. 4 in the first embodiment and has differences from the control processing in FIG. 4 only regarding inclusion of the correction section 322 in the air conditioning control device 40.

As shown in FIG. 7, the correction section 322 in the present embodiment first acquires a sensor output value Vs output from the particulate sensor 321 in step S011. The sensor output value Vs is input to the air conditioning control device 40 as one of detection signals from sensors and the like connected to the air conditioning control device 40. After step S011, the correction section 322 goes to step S021.

In step S021, the correction section 322 acquires wind speed correlated information from another functional unit of the air conditioning control device 40, for example. Except for this point, step S021 is similar to step S020 in FIG. 4.

Then, the correction section 322 estimates a wind speed at a sensed position based on the acquired wind speed correlated information as in step S020 in FIG. 4. After step S021, the correction section 322 goes to step S030.

Since step S030 in FIG. 7 is similar to step S030 in FIG. 4, step S030 in FIG. 7 will not be described.

When the correction section 322 determines that there is a difference between the wind speed at the sensed position and the criterion wind speed Sd in step S030 in FIG. 7, the correction section 322 goes to step S051. On the other hand, when the correction section 322 determines that there is no difference between the wind speed at the sensed position and the criterion wind speed Sd, the correction section 322 goes to step S041.

In step S041, the correction section 322 decides to employ the sensor output value Vs acquired in step S011 as it is as a corrected value Vc. The correction section 322 outputs the determined corrected value Vc to functional units of the air conditioning control device 40 other than the correction section 322 or external devices such as a display device connected to the air conditioning control device 40, for example. In short, the correction section 322 outputs the sensor output value Vs as it is. Although the unit or device to which the correction section 322 outputs the sensor output value Vs in step S041 is different from that in step S040 in FIG. 4, step S041 is the same as step S040 in FIG. 4 in other points. After step S041, the correction section 322 returns to step S011 in FIG. 7.

In step S051, the correction section 322 determines the corrected value Vc based on the sensor output value Vs and the wind speed at the sensed position. The corrected value Vc is determined in step S051 in the same way as in step S050 in FIG. 4. The correction section 322 outputs the determined corrected value Vc to functional units of the air conditioning control device 40 other than the correction section 322 or external devices such as a display device connected to the air conditioning control device 40, for example. In short, the correction section 322 corrects the sensor output value Vs and outputs the corrected value.

Although the unit or device to which the correction section 322 outputs the corrected value Vc in step S051 is different from that in step S050 in FIG. 4, step S051 is the same as step S050 in FIG. 4 in other points. After step S051, the correction section 322 returns to step S011 in FIG. 7.

Except for the above described points, the present embodiment is the same as the first embodiment. In the present embodiment, as in the above-described first embodiment, it is possible to obtain effects exerted by the same structures as those in the first embodiment.

According to the present embodiment, as shown in FIG. 6, the correction section 322 is included in the air conditioning control device 40 and the particulate sensor 321 is provided separately from the air conditioning control device 40. Therefore, it is possible to reduce the number of parts of hardware forming the correction section 322 as compared with the case where the correction section 322 is provided separately from the air conditioning control device 40.

### (Third Embodiment)

Next, a third embodiment will be described. In the present embodiment, differences from the above-described second embodiment will be mainly described.

As shown in FIG. 8, an air conditioning unit 2 includes a wind speed sensor 34. The present embodiment is different from the second embodiment in this point.

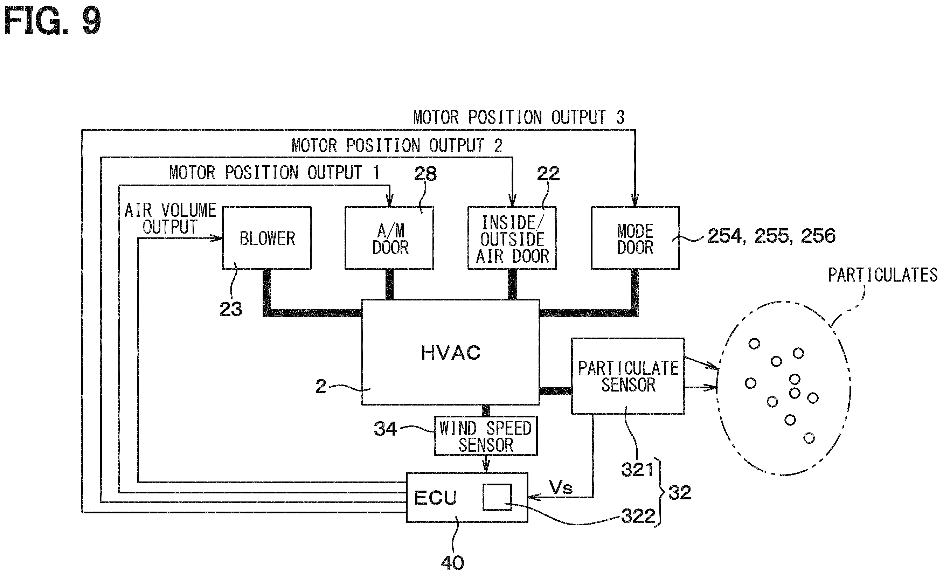

To put it concretely, since the wind speed sensor 34 detects a wind speed at a position sensed by a particulate sensor 321, the wind speed sensor 34 is provided at the same position as the particulate sensor 321. In other words, the wind speed sensor 34 is disposed on a downstream side of an air filter 30 in an air flow direction and on an upstream side of an evaporator 26 in the air flow direction in a ventilating path 24 of an air conditioning case 21. As shown in FIG. 9, a detection signal indicating the wind speed at the sensed position is input from the wind speed sensor 34 to an air conditioning control device 40.

A correction section 322 in the present embodiment performs control processing in FIG. 10 during operation of the air conditioning unit 2, for example. The control processing in FIG. 10 is basically the same as the control processing in FIG. 7 in the second embodiment and is different from the control processing in FIG. 7 only in the method of acquiring the wind speed at the sensed position. To put it concretely, steps S011, S030, S041, S051 in FIG. 10 are the same as steps S011, S030, S041, S051 in FIG. 7, respectively. Therefore, description of these steps will be omitted and step S022 in FIG. 10 will be described below.

As shown in FIG. 10, in step S022 following step S011, the correction section 322 acquires the wind speed at the position sensed by the particulate sensor 321 from the wind speed sensor 34. Therefore, in the present embodiment, the wind speed at the sensed position is not estimated based on the wind speed correlated information but directly detected by the wind speed sensor 34. After step S022, the correction section 322 goes to step S030.

Except for the above described point, the present embodiment is the same as the second embodiment. In the present embodiment, as in the above-described second embodiment, it is possible to obtain effects exerted by the same structures as those in the second embodiment.

According to the present embodiment, as shown in FIGS. 8 and 10, the wind speed sensor 34 that detects the wind speed at the position sensed by the particulate sensor 321 is provided. The correction section 322 acquires the wind speed at the sensed position from the wind speed sensor 34. Therefore, it is possible to easily and accurately acquire the wind speed at the sensed position.

Although the present embodiment is a modification of the second embodiment, the present embodiment may be combined with the above-described first embodiment as well.

### (Other Embodiments)

(1) In each of the above-described embodiments, the position sensed by the particulate sensor 321 is on the downstream side of the air filter 30 in the air flow direction and on the upstream side of the evaporator 26 in the air flow direction in the ventilating path 24 in the air conditioning case 21 as shown in FIGS. 1 and 8, which is only an example. The sensed position may be at one of the plurality of blow openings 251, 252, 253, for example. The sensed position may not be in the air conditioning unit 2.
(2) Although the sensor output value Vs and the corrected value Vc are the voltage values in each of the above-described embodiments, the sensor output value Vs and the corrected value Vc may be physical quantities other than the voltage values, as long as the physical quantities can indicate the particulate concentration.
(3) In each of the above-described embodiments, the particulate sensor 321 is the sensor that indicates the higher particulate concentration when the output voltage as the sensor output value Vs is larger, which is only an example. The particulate sensor 321 may be a sensor that indicates a higher particulate concentration when an output voltage is smaller. In such a sensor, a low-voltage side of the sensor output value Vs corresponds to a higher side of the particulate concentration indicated by the sensor output value Vs.
(4) In each of the flowcharts in FIGS. 4, 7, and 10 in the above-described respective embodiments, the determination in step S030 is performed by determining whether the wind speed at the sensed position falls within the predetermined criterion wind speed range including the criterion wind speed Sd as the median wind speed, which is only an example. For example, the determination in step S030 may be performed by comparing the wind speed at the sensed position and the criterion wind speed Sd with each other and determining whether the wind speed at the sensed position coincides with the criterion wind speed Sd.
(5) Although the processing in each of the steps shown in the flowcharts in FIGS. 4, 7, and 10 is realized by the computer program in the above-described respective embodiments, the processing may be formed by a hard wired logic.

## Claims

1. A particulates detector (32) that is adapted to detect a particulate concentration at a predetermined sensed position, the device comprising:
an optical particulate sensor (321) that outputs a sensor output value (Vs) depending on the particulate concentration at the sensed position; and
a correction section (322) that is adapted to determine a corrected value (Vc) by correcting the sensor output value (Vs) as a value indicating the particulate concentration, wherein,
the correction section (322) is adapted to perform the determination of the corrected value (Vc), such that the particulate concentration indicated by the corrected value (Vc) decreases with decrease in wind speed at the sensed position in a case where the sensor output value (Vs) is fixed,
the correction section (322) is adapted to estimate the wind speed at the sensed position based on wind speed correlated information correlated with the wind speed at the sensed position or to acquire the wind speed at the sensed position from a wind speed sensor (34) that is adapted to detect the wind speed at the sensed position,
**characterized in that**
the correction section (322) is adapted to determine the corrected value (Vc) to be the sensor output value (Vs), when there is no difference between the wind speed at the sensed position and a criterion wind speed (Sd) determined in advance, and
the correction section (322) is adapted to determine the corrected value (Vc) to be lower in the particulate concentration than the sensor output value (Vs), when the wind speed at the sensed position is lower than the criterion wind speed (Sd), and the correction section (322) is adapted to increase a difference between the sensor output value (Vs) and the corrected value (Vc) with decrease in wind speed at the sensed position.

2. The particulates detector (32) according to claim 1, wherein:
the correction section (322) is adapted to determine the corrected value (Vc) to be the sensor output value (Vs), when there is no difference between the wind speed at the sensed position and the criterion wind speed (Sd) determined in advance; and,
the correction section (322) is adapted to determine the corrected value (Vc) to be higher in the particulate concentration than the sensor output value (Vs), when the wind speed at the sensed position is higher than the criterion wind speed (Sd), and the correction section (322) is adapted to increase a difference between the sensor output value (Vs) and the corrected value (Vc) with increase in wind speed at the sensed position.

3. The particulates detector (32) according to any one of claims 1 to 2, wherein the case where the sensor output value (Vs) is fixed is a case where a certain value (V1) obtained as the sensor output value (Vs) is corrected for acquiring the corrected value (Vc).

4. The particulates detector (32) according to claims 1 to 3, wherein:
predetermined relationships among the sensor output value (Vs), the actual particulate concentration, and the wind speed at the sensed position are determined in advance;
the predetermined relationships include a criterion relationship (L0) between the sensor output value (Vs) and the actual particulate concentration when the wind speed at the sensed position is the criterion wind speed (Sd) determined in advance; and
the correction section (322) is adapted to obtain the particulate concentration from the wind speed at the sensed position and the sensor output value (Vs) by using the predetermined relationships and is adapted to determine the corrected value (Vc) to be a value that corresponds to the obtained particulate concentration in the criterion relationship (L0).

5. The particulates detector (32) according to any one of claims 1 to 4, wherein the sensor output value (Vs) and the corrected value (Vc) are voltage values.

6. The particulates detector (32) according to any one of claims 1 to 5, wherein:
the sensed position is a portion in an air conditioning unit (2) provided in a vehicle interior;
the correction section (322) is included in a control device (40) that controls the air conditioning unit (2); and
the optical particulate sensor (321) is provided separately from the control device (40).

## Patentansprüche

1. Partikeldetektor (32), der angepasst ist, eine Partikelkonzentration an einer vorbestimmten Messposition zu erfassen, wobei die Vorrichtung Folgendes aufweist:
einen optischen Partikelsensor (321), der einen Sensorausgabewert (Vs) in Abhängigkeit von der Partikelkonzentration an der Messposition ausgibt; und
einen Korrekturbereich (322), der angepasst ist, einen korrigierten Wert (Vc) zu bestimmen, indem der Sensorausgabewert (Vs) als ein Wert, der die Partikelkonzentration angibt, korrigiert wird, wobei
der Korrekturbereich (322) angepasst ist, die Bestimmung des korrigierten Werts (Vc) so auszuführen, dass die Partikelkonzentration, die durch den korrigierten Wert (Vc) angegeben wird, in einem Fall, in dem der Sensorausgabewert (Vs) feststeht, mit einer Abnahme der Windgeschwindigkeit an der Messposition abnimmt,
der Korrekturbereich (322) angepasst ist, die Windgeschwindigkeit an der Messposition auf der Grundlage von Windgeschwindigkeitskorrelationsinformationen zu schätzen, die mit der Windgeschwindigkeit an der Messposition korrelieren, oder die Windgeschwindigkeit an der Messposition von einem Windgeschwindigkeitssensor (34) zu erlangen, der angepasst ist, die Windgeschwindigkeit an der Messposition zu erfassen, **dadurch gekennzeichnet, dass**
der Korrekturbereich (322) angepasst ist, den korrigierten Wert (Vc) zu bestimmen, der Sensorausgabewert (Vs) zu sein, wenn es keine Differenz zwischen der Windgeschwindigkeit an der Messposition und einer vorab bestimmten Kriteriumswindgeschwindigkeit (Sd) gibt, und
der Korrekturbereich (322) angepasst ist, den korrigierten Wert (Vc) zu bestimmen, hinsichtlich der Partikelkonzentration niedriger zu sein als der Sensorausgabewert (Vs), wenn die Windgeschwindigkeit an der Messposition niedriger als die Kriteriumswindgeschwindigkeit (Sd) ist, und der Korrekturbereich (322) angepasst ist, eine Differenz zwischen dem Sensorausgabewert (Vs) und dem korrigierten Wert (Vc) mit einer Abnahme der Windgeschwindigkeit an der Messposition zu erhöhen.

2. Partikeldetektor (32) nach Anspruch 1, wobei:
der Korrekturbereich (322) angepasst ist, den korrigierten Wert (Vc) zu bestimmen, der Sensorausgabewert (Vs) zu sein, wenn es keine Differenz zwischen der Windgeschwindigkeit an der Messposition und der vorab bestimmten Kriteriumswindgeschwindigkeit (Sd) gibt; und
der Korrekturbereich (322) angepasst ist, den korrigierten Wert (Vc) zu bestimmen, hinsichtlich der Partikelkonzentration höher als der Sensorausgabewert (Vs) zu sein, wenn die Windgeschwindigkeit an der Messposition höher ist als die Kriteriumswindgeschwindigkeit (Sd), und der Korrekturbereich (322) angepasst ist, eine Differenz zwischen dem Sensorausgabewert (Vs) und dem korrigierten Wert (Vc) mit einer Zunahme der Windgeschwindigkeit an der Messposition zu erhöhen.

3. Partikeldetektor (32) nach einem der Ansprüche 1 bis 2, wobei der Fall, in dem der Sensorausgabewert (Vs) feststeht, ein Fall ist, in dem ein gewisser Wert (V1), der als der Sensorausgabewert (Vs) erhalten wird, zum Erlangen des korrigierten Werts (Vc) korrigiert wird.

4. Partikeldetektor (32) nach den Ansprüchen 1 bis 3, wobei:
vorbestimmte Beziehungen unter dem Sensorausgabewert (Vs), der tatsächlichen Partikelkonzentration und der Windgeschwindigkeit an der Messposition vorab bestimmt sind;
die vorbestimmten Beziehungen eine Kriteriumsbeziehung (L0) zwischen dem Sensorausgabewert (Vs) und der tatsächlichen Partikelkonzentration aufweisen, wenn die Windgeschwindigkeit an der Messposition die vorab bestimmte Kriteriumswindgeschwindigkeit (Sd) ist; und
der Korrekturbereich (322) angepasst ist, die Partikelkonzentration aus der Windgeschwindigkeit an der Messposition und dem Sensorausgabewert (Vs) zu erhalten, indem die vorbestimmten Beziehungen verwendet werden, und angepasst ist, den korrigierten Wert (Vc) zu bestimmen, um ein Wert zu sein, der der erhaltenen Partikelkonzentration in der Kriteriumsbeziehung (L0) entspricht.

5. Partikeldetektor (32) nach einem der Ansprüche 1 bis 4, wobei der Sensorausgabewert (Vs) und der korrigierte Wert (Vc) Spannungswerte sind.

6. Partikeldetektor (32) nach einem der Ansprüche 1 bis 5, wobei:
die Messposition ein Abschnitt in einer Klimatisierungseinheit (2) ist, die in einem Fahrzeuginnenraum vorgesehen ist;
der Korrekturbereich (322) in einer Steuerungsvorrichtung (40) enthalten ist, die die Klimatisierungseinheit (2) steuert; und
der optische Partikelsensor (321) separat von der Steuerungsvorrichtung (40) vorgesehen ist.

## Revendications

1. Détecteur de particules (32) qui est adapté pour détecter une concentration de particules à une position détectée prédéterminée, le dispositif comprenant :
un capteur optique de particules (321) qui émet une valeur de sortie de capteur (Vs) en fonction de la concentration de particules à la position détectée ; et
une section de correction (322) qui est adaptée pour déterminer une valeur corrigée (Vc) en corrigeant la valeur de sortie du capteur (Vs) en tant que valeur indiquant la concentration de particules,
la section de correction (322) étant adaptée pour effectuer la détermination de la valeur corrigée (Vc), de sorte que la concentration de particules indiquée par la valeur corrigée (Vc) diminue avec la diminution de la vitesse du vent à la position détectée dans un cas où la valeur de sortie du capteur (Vs) est fixe,
la section de correction (322) étant adaptée pour estimer la vitesse du vent à la position détectée sur la base d'informations de corrélation à la vitesse du vent, corrélées avec la vitesse du vent à la position détectée ou pour acquérir la vitesse du vent à la position détectée à partir d'un capteur de vitesse du vent (34) qui est adapté pour détecter la vitesse du vent à la position détectée,
**caractérisé en ce que**
la section de correction (322) est adaptée pour déterminer la valeur corrigée (Vc) comme étant la valeur de sortie du capteur (Vs), lorsqu'il n'y a pas de différence entre la vitesse du vent à la position détectée et une vitesse du vent de critère (Sd) déterminée à l'avance, et
la section de correction (322) étant adaptée pour déterminer la valeur corrigée (Vc) comme étant inférieure, en ce qui concerne la concentration en particules à la valeur de sortie du capteur (Vs), lorsque la vitesse du vent à la position détectée est inférieure à la vitesse du vent de critère (Sd), et la section de correction (322) étant adaptée pour augmenter une différence entre la valeur de sortie du capteur (Vs) et la valeur corrigée (Vc) avec la diminution de la vitesse du vent à la position détectée.

2. Détecteur de particules (32) selon la revendication 1,
la section de correction (322) étant adaptée pour déterminer la valeur corrigée (Vc) comme étant la valeur de sortie du capteur (Vs), lorsqu'il n'y a pas de différence entre la vitesse du vent à la position détectée et la vitesse du vent de critère (Sd) déterminée à l'avance ; et,
la section de correction (322) étant adaptée pour déterminer la valeur corrigée (Vc) pour être plus élevée dans la concentration de particules que la valeur de sortie du capteur (Vs), lorsque la vitesse du vent à la position détectée est supérieure à la vitesse du vent de critère (Sd), et la section de correction (322) étant adaptée pour augmenter une différence entre la valeur de sortie du capteur (Vs) et la valeur corrigée (Vc) avec l'augmentation de la vitesse du vent à la position détectée.

3. Détecteur de particules (32) selon l'une quelconque des revendications 1 et 2, le cas où la valeur de sortie du capteur (Vs) est fixe étant un cas où une certaine valeur (V1) obtenue comme valeur de sortie du capteur (Vs) est corrigée pour acquérir la valeur corrigée (Vc).

4. Détecteur de particules (32) selon les revendications 1 à 3,
des relations prédéterminées entre la valeur de sortie du capteur (Vs), la concentration réelle en particules et la vitesse du vent à la position détectée étant déterminées à l'avance ;
les relations prédéterminées comprenant une relation de critère (LO) entre la valeur de sortie du capteur (Vs) et la concentration réelle en particules lorsque la vitesse du vent à la position détectée est la vitesse du vent de critère (Sd) déterminée à l'avance ; et
la section de correction (322) étant adaptée pour obtenir la concentration de particules à partir de la vitesse du vent à la position détectée et de la valeur de sortie du capteur (Vs) en utilisant les relations prédéterminées et étant adaptée pour déterminer la valeur corrigée (Vc) comme étant une valeur qui correspond à la concentration de particules obtenue dans la relation de critère (L0).

5. Détecteur de particules (32) selon l'une quelconque des revendications 1 à 4, la valeur de sortie du capteur (Vs) et la valeur corrigée (Vc) étant des valeurs de tension.

6. Détecteur de particules (32) selon l'une quelconque des revendications 1 à 5,
la position détectée étant une partie dans une unité de climatisation (2) prévue dans un habitacle de véhicule ;
la section de correction (322) étant incluse dans un dispositif de commande (40) qui commande l'unité de climatisation (2) ; et le capteur optique de particules (321) étant fourni séparément du dispositif de commande (40).
